# EUROPÄISCHE PATENTSCHRIFT

(11) **EP 2 519 399 B1**
(45) Veröffentlichungstag und Bekanntmachung des Hinweises auf die Patenterteilung: **07.11.2018**
(21) Anmeldenummer: 10798137.5
(22) Anmeldetag: 29.12.2010
(51) Int. Cl.: B29C 70/38, B29C 33/68, B29C 70/54, B29C 70/30, B29C 70/44

(54) **VERFAHREN UND ABLEGEWERKZEUG ZUR HERSTELLUNG EINES FASERGELEGES**
METHOD AND LAYMENT TOOL FOR PRODUCING A FIBER SCRIM
PROCÉDÉ ET OUTIL DE PLACEMENT POUR FABRIQUER UNE GRILLE DE FIBRES NON TISSÉES

(30) Priorität: 29.12.2009 US 290512 P; 29.12.2009 DE 102009060696
(43) Veröffentlichungstag der Anmeldung: 07.11.2012
(73) Patentinhaber: Airbus Operations GmbH, 21129 Hamburg (DE)
(72) Erfinder: LEMCKAU, Thomas, 21614 Buxtehude (DE); HARDERS, Sönke, 6950 Ringkobing (DK); KERCHNAWE, Sophie, 85049 Ingolstadt (DE)
(74) Vertreter: LKGLOBAL Lorenz & Kopf PartG mbB Patentanwälte
(86) Internationale Anmeldenummer: PCT/EP2010/070827
(87) Internationale Veröffentlichungsnummer: WO 2011/080287

(56) Entgegenhaltungen:
- EP-A2- 0 062 991
- WO-A1-2009/130493
- FR-A1- 2 905 891
- FR-A1- 2 912 077

## Beschreibung

Die vorliegende Erfindung betrifft ein Verfahren zum Ablegen von faserverstärkten vorimprägnierten flächigen Halbzeugen auf einem Ablegewerkzeug zur Herstellung eines Fasergeleges sowie ein Ablegewerkzeug zur Durchführung eines derartigen Verfahrens.

Verfahren zum Ablegen von Prepregs bzw. faserverstärkten vorimprägnierten flächigen Halbzeugen auf einem Ablegewerkzeug zur Herstellung eines Fasergeleges sind allgemein als "Automated Fibre Placement" (AFP) bzw. "Automated Tape Placement" (ATP) bekannt. Dabei werden Halbzeuge, die mit einem duroplastischen oder thermoplastischen Material vorimprägnierte Fasern aufweisen, beispielsweise zueinander orientierte Kohlenstofffasern, auf einem Werkzeug endkonturnah abgelegt. Der wesentliche Unterschied zwischen dem AFP- und dem ATP-Prozess besteht darin, dass bei dem AFP-Prozess schmale Material- bzw. Halbzeugbänder abgelegt werden, wohingegen bei dem ATP-Prozess breitbandige Materialbahnen Anwendung finden, wodurch sich insbesondere das AFP-Verfahren zur Abbildung dreidimensionaler Strukturen eignet. Das Werkzeug weist meistens eine horizontale oder vertikal ausgerichtete Oberfläche zur Aufnahme des abzulegenden Materials auf. Um das Material am vertikal ausgerichteten Werkzeug positionieren zu können, wird herkömmlicherweise ein flüssiger Haftvermittler auf die Werkzeugoberfläche aufgetragen. Der Haftvermittler ermöglicht zum einen eine ausreichende Sicherung des Materials bzw. Fasergeleges an der Werkzeugoberfläche als auch ein einfaches Lösen des Fasergeleges von der Oberfläche. Nachteilig an dem Haftvermittler ist jedoch sowohl das aufwendige Auftragen auf die Werkzeugoberfläche als auch das zeitintensive Reinigen der Werkzeugoberfläche nach dem Lösen des Fasergeleges, wodurch die Ablegeleistung merklich reduziert ist. Grundsätzlich ist auch eine Positionierung des Materials an der Werkzeugoberfläche ohne einen flüssigen Haftvermittler möglich, jedoch ist dann das Fasergelege nur sehr schwer von der Werkzeugoberfläche zu trennen. Weiterhin können von dem Haftvermittler gesundheitliche Gefahren und Umweltbelastungen ausgehen, so dass entsprechende Sicherheit bzw. Umweltvorschriften einzuhalten sind.

FR 2 905 891 beschreibt ein Verfahren zum Herstellen einer Platte aus einem Verbundwerkstoff unter Verwendung eines Werkzeugs mit einem Träger, auf dem ein Lay-up durchgeführt wird, welches in einem Aufbau aus einem Stapel von Lagen aus Faser Prepregs resultiert. Das Verfahren ist so ausgebildet, dass eine erste Gruppe von Polyimid-Folien zwischen dieser und der Verdichtungsplatte in Kontakt mit dem Stapel von Lagen angeordnet ist.

In der FR 2 912 077 wird ein Verfahren beschrieben, bei dem ein oder mehrere thermoplastische Folien auf ein ebenes oder gekrümmtes Werkzeug abgelegt werden. Darauf werden anschließend Polymerstreifen aufgebracht und auf die Folien gepresst. Diese werden durch Saugpumpen gehalten.

Aufgabe der vorliegenden Erfindung ist es, ein Verfahren zum Ablegen von faserverstärkten vorimprägnierten flächigen Halbzeugen auf einem Ablegewerkzeug zur Herstellung eines Fasergeleges, das die vorgenannten Nachteile beseitigt und eine erhöhte Ablegeleistung sowie keine bzw. stark reduzierte gesundheitliche bzw. umweltbelastende Wirkungen aufweist, sowie ein Ablegewerkzeug für ein derartiges Verfahren zu schaffen.

Diese Aufgabe wird gelöst durch ein Verfahren mit den Merkmalen des Patentanspruchs 1 und durch ein Ablegewerkzeug mit den Merkmalen des Patentanspruchs 6.

Bei einem erfindungsgemäßen Verfahren zum Ablegen von faserverstärkten vorimprägnierten flächigen Halbzeugen auf einem Ablegewerkzeug zur Herstellung eines Fasergeleges wird zuerst eine Ablegefolie zur Aufnahme der Halbzeuge mittels Vakuumbeaufschlagung auf dem Ablegewerkzeug fixiert. Dann werden die Halbzeuge schichtweise zu Hautlagen auf der Ablegefolie abgelegt. Nach dem Aufbau des Geleges bzw. Laminats wird dieses an ein nachfolgendes Fertigungsmittel durch Verschwenken des Ablegewerkzeugs und anschließendem Aufheben des Vakuums übergeben. Dann wird die Ablegefolie von der ersten Hautlage entfernt und eine nachfolgende Bearbeitung des Geleges kann beginnen. An der erfindungsgemäßen Lösung ist insbesondere vorteilhaft, dass die Fixierung der Halbzeuge an dem Ablegewerkzeug ohne einen flüssigen Haftvermittler erfolgt, sondern über eine einfach anzubringende und zu entfernende Ablegefolie. Dies ermöglicht zum einen eine erhöhte Ablegeleistung, da zum einen die Aufbringung des Haftvermittlers als auch die Reinigung des Ablegewerkzeugs entfällt sowie eine wesentliche Verringerung bzw. eine vollständige Beseitigung gesundheitlicher und umweltbelastender Risiken. Insbesondere wird die Ablegegeschwindigkeit der ersten Hautlage wesentlich erhöht. Die Ablagefolie dient quasi als Oberflächenschutz für die Werkzeugoberfläche und erlaubt bei einer ausreichenden Sicherung des Fasergeleges bzw. dessen erster Hautlage aufgrund der serienmäßigen Imprägnierung der Halbzeuge an ihr gleichzeitig ein einfaches und schnelles Ablösen sowohl von der Werkzeugoberfläche als auch von der ersten Hautlage zur bzw. nach zum Beispiel der Übergabe des Fasergeleges an eine nachfolgende Arbeitsstation.

Bei einem bevorzugten Ausführungsbeispiel werden die Hautlagen über ein Zwischenvakuum kompaktiert, so dass sichergestellt sein kann, dass sich keine Hohlräume zwischen den einzelnen Hautlagen ausbilden. Die Kompaktierung bzw. Erzeugung des Zwischenvakuums kann über das Abdecken der Hautlagen mittels einer Folie erfolgen, die gegenüber der Außenumgebung abgedichtet ist und somit eine Kammer bildet, in der die Hautlagen angeordnet sind und die durch das Anlegen eines Vakuums evakuiert werden kann.

Neben dem Ablegen von vorimprägnierten flächigen Halbzeugen können ebenfalls andersartige Materialien bzw. Komponenten wie z.B. ein Blitzschutz in Form eines flächigen Kupfergitters abgelegt werden und mit den zuvor abgelegten Hautlagen über ein Zwischenvakuum kompaktiert werden.

Die Positionierung der Ablegefolie an dem Ablegewerkzeug erfolgt bei einem Ausführungsbeispiel dadurch, dass diese zuerst in diagonaler Richtung an dem Ablegewerkzeug gespannt wird. Dann wird sie im Bereich ihrer diametralen Seiten gespannt und auf Falten- bzw. Blasenbildung kontrolliert. Nach der Beseitigung der Falten bzw. Blasen wird die Ablegefolie gegenüber der Außenumgebung umfangsseitig durch z.B. ein umlaufendes Klebeband an dem Ablegewerkzeug abgedichtet. Eine andere Art der Abdichtung sieht einen Druckrahmen vor, mittels der die Folie in ihrem Randbereich gegen in Anlage mit der Werkzeugoberfläche bringbar ist.

Ein erfindungsgemäßes Ablegewerkzeug zum Ablegen von faserverstärkten flächigen Halbzeugen zur Bildung eines Fasergeleges weist eine Vielzahl von in ihre Werkzeugoberfläche eingebrachten Bohrungen auf, die mit einer Entlüftungseinrichtung in Fluidverbindung bringbar sind. Die Vielzahl der Bohrungen erlaubt eine gleichmäßige und großflächige falten- und blasenfreie Sicherung eines auf der Werkzeugoberfläche abgelegten Flächengebildes wie zum Beispiel eine Ablegefolie zur Aufnahme der Halbzeuge.

Die Bohrungen sind in Bohrungsfelder unterteilt, die getrennt voneinander ansteuerbar sind. Somit ist es möglich, zuerst die Ablegefolie sicher an der Werkzeugoberfläche mittels Luftabsaugung zu fixieren und dann die auf der Ablegefolie abgelegten Hautlagen über zumindest ein Zwischenvakuum zu kompaktieren, ohne dass dies die Fixierung der Ablegefolie negativ beeinflussen würde.

Sonstige vorteilhafte Ausführungsbeispiele der vorliegenden Erfindung sind Gegenstand weiterer Unteransprüche.

Im Folgenden wird ein bevorzugtes Ausführungsbeispiel der Erfindung anhand schematischer Darstellungen näher erläutert. Es zeigen:
Figur 1 eine perspektivische Darstellung eines erfindungsgemäßen Ablegewerkzeugs,
Figur 2 das Ablegewerkzeug aus Figur 1 mit positionierter Ablegefolie,
Figur 3 Verfahrensschritte zur Positionierung der Ablegefolie an dem Ablegewerkzeug,
Figur 4 das Ablegen von Hautlagen an der Ablegefolie, und
Figuren 5 bis 7 die Übergabe der Hautlagen an eine Aushärteeinrichtung.

Im Folgenden tragen gleiche konstruktive Elemente die gleichen Bezugsziffern, wobei bei mehreren gleichen konstruktiven Elementen in einer Figur aus Gründen der Übersichtlichkeit lediglich einige der Elemente mit einer Bezugsziffer versehen sind.

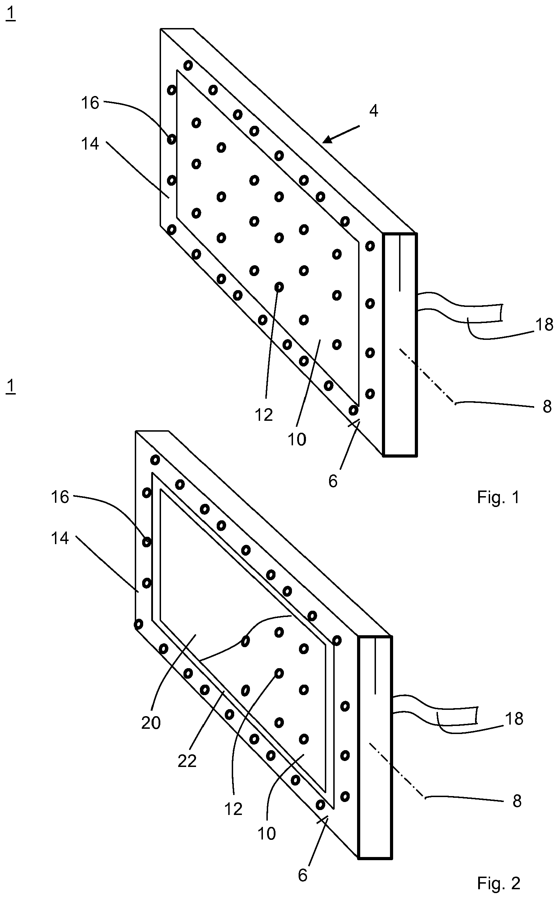

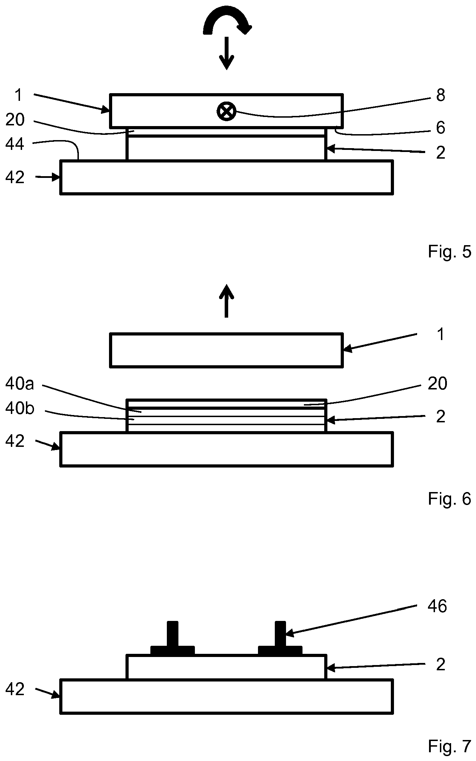

Figur 1 zeigt ein erfindungsgemäßes Ablegewerkzeug 1 zur Herstellung eines Fasergeleges bzw. Laminats 2 (s. Fig. 7). Das Fasergelege 2 bildet zum Beispiel die Haut eines etwa 16m langes Schalenelements eines Flugzeugrumpfes, der sich aus vier Schalenelementen zusammensetzt, die an ihren Längsseiten miteinander verbunden sind.

Das Ablegewerkzeug 1 weist einen in etwa rechteckigen Korpus 4 mit einer vertikal orientierten Werkzeugoberfläche 6 auf und ist um seine Längsachse 8 verschwenkbar. Die Werkzeugoberfläche 6 ist konturnah zum Innenumfang des Flugzeugrumpfes ausgebildet und entsprechend entlang der Längsachse 8 konkav gewölbt (nicht gezeigt). Sie hat ein inneres Bohrungsfeld 10 mit einer Vielzahl von Bohrungen 12 und ein äußeren Bohrungsfeld 14 mit einer Vielzahl von Bohrungen 16, das das innere Bohrungsfeld 10 rahmenartig umgreift. Die Bohrungen 12, 16 stehen über eine rohr- bzw. schlauchartige Leitung 18 mit einer nicht dargestellten Entlüftungseinrichtung in Fluidverbindung, mittels der durch die Bohrungen 12, 16 Luft von der Werkzeugoberfläche 6 abgesaugt oder ausgeblasen werden kann.

Zur Herstellung des Fasergeleges 2 wird, wie in Figur 2 gezeigt, zuerst eine Ablegefolie 20 auf der Werkzeugoberfläche 6 über dem ersten Bohrungsfeld 10 positioniert und mittels eines umlaufenden Klebebandes 22 an der Werkzeugoberfläche 6 gegenüber der Außenumgebung abgedichtet. Die Ablegefolie 20 besteht vorzugsweise aus einem thermoplastischen Kunststoff, beispielsweise Polyethylenterephthalat (PET). Beispielhafte Ablegefolien 20 sind Platilon 4100 AK der Firma Epurex, MF PATS W230 sowie MF PATS W230 Corona der Firma MF Folien, HS 8171 der Firma Richmond sowie Securlon L2000 der Firma Airtech. Die Ablegefolie 20 hat eine derartige Oberflächenbeschaffenheit, dass sie eine ausreichende Sicherung des Fasergeleges 2 ohne die Verwendung von zusätzlichen flüssigen Haftvermittlers und gleichzeitig ein einfaches Lösen von dem Fasergelege 2 erlaubt.

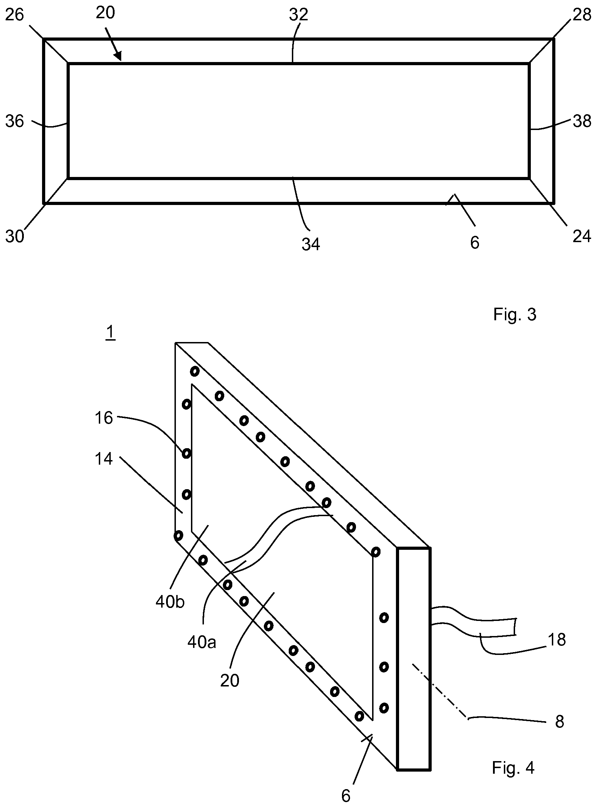

Gemäß der Darstellung in Figur 3 wird die Ablegefolie 20 zuerst an ihren gegenüberliegenden Ecken 24, 26 bzw. 28, 30 an der Werkzeugoberfläche 6 gespannt. Dann wird sie diametral an ihren Längsseiten 32, 34 und abschließend an ihren Schmalseiten 36, 38 gespannt bis sie plan auf der Werkzeugoberfläche 6 aufliegt und sämtliche bzw. nahezu sämtliche Falten, Knicke oder Blasen in bzw. unter ihr beseitigt sind. Sobald die Ablegefolie 20 ausreichend an der Werkzeugoberfläche 6 gespannt ist, wird sie über das Klebeband 22 an der Werkzeugoberfläche 6 fixiert. Nun wird die Entlüftungseinrichtung derart angesteuert, dass über die Bohrungen 12 des inneren Bohrungsfeldes 10 die Luft zwischen der Ablegefolie 20 und der Werkzeugoberfläche 6 großflächig und gleichmäßig abgesaugt wird und somit sichergestellt ist, dass in keinem Bereich der Ablegefolie 20 Falten, Knicke, Blasen und drgl. ausgebildet sind. Das anzulegende Vakuum richtet sich im Wesentlichen nach dem Materialtyp und der Dicke der Ablegefolie 20.

Nach der knick- und blasenfreien Fixierung der Ablegefolie 20 werden, wie in Figur 4 gezeigt, Hautlagen 40a, 40b durch Ablegen von textilen vorimprägnierten Halbzeugen, sogenannten Preprags, die auf entsprechenden Vorspulen gelagert sind, entsprechend dem AFP-Verfahren zur Bildung des Fasergeleges 2 auf der Ablegefolie 20 schichtweise abgelegt. Nach der Bildung bzw. Schichtung einer Vielzahl von Hautlagen 40a, 40b können diese über ein Zwischenvakuum kompaktiert werden. Dies erfolgt dadurch, dass über die zuletzt gebildete Hautlage 40b eine Folie (nicht gezeigt) abgelegt wird, die das äußere Bohrungsfeld 14 überspannt und dichtend an der Werkzeugoberfläche 6 beispielweise über ein umlaufendes Klebeband befestigt wird. Dann wird über die Entlüftungseinrichtung das äußere Bohrungsfeld 14 angesteuert, so dass über die Bohrungen 16 die Luft zwischen der Folie und der obersten Hautlage 40b abgesaugt wird. Nach der Kompaktierung wird das Zwischenvakuum über ein Umschalten der Entlüftungseinrichtung gelöst, wodurch nun Luft über die Bohrungen 16 im Randbereich der Werkzeugoberfläche 6 ausströmen kann. Dann wird die Folie entfernt und weitere Hautlagen 40 bzw. sonstige Flächengebilde wie zum Beispiel ein Blitzschutzgitter werden auf der obersten Hautlage 40b abgelegt, bis das Fasergelege 2 die vorbestimmten Hautlagenanzahl bzw. Materialstärke aufweist.

Nach dem Ablegen sämtlicher Hautlagen 40 wird das Fasergelege 2, wie in Figur 5 gezeigt, an eine Aushärteeinrichtung 42 zur weiteren Bearbeitung übergeben. Dabei wird es um seine Längsachse 8 verschwenkt bis die Werkzeugoberfläche 6 horizontal mit dem nach unten zeigenden Fasergelege 2 oberhalb einer horizontalen bzw. entsprechend konvexen Oberfläche 44 der Aushärteeinrichtung 42 angeordnet ist. Dann wird das erste Bohrungsfeld 10 derart angesteuert, dass über die Bohrungen 12 Luft ausgeblasen wird bzw. einströmen kann und somit das Vakuum zwischen der Werkzeugoberfläche 6 und der Ablegefolie 20 aufgehoben wird. Das Klebeband 22 wird entfernt und die Werkzeugoberfläche 6 ist von dem Fasergelege 2 befreit.

Nach dem Aufheben des Vakuums bzw. der Übergabe des Fasergeleges 2 an die Auswerteeinrichtung 42 wird, wie in Figur 6 gezeigt, das Ablegewerkzeug 1 zurückgefahren und der Aufbau eines neuen Fasergeleges kann beginnen. Von dem in der Auswerteeinrichtung 42 positionierten Fasergelege 2 wird die Ablegefolie 20 von der zuerst abgelegten Hautlage 40a entfernt, so dass nun, wie in Figur 7 gezeigt, nachfolgende Bearbeitungsschritte wie zum Beispiel die Anbindung von Längsversteifungen 46 zur Bildung einer versteifenden Hinterbaustruktur des Fasergeleges 2 erfolgen kann.

Offenbart ist ein Verfahren zum Ablegen von faserverstärkten vorimprägnierten flächigen Halbzeugen auf einem Ablegewerkzeug 1 zur Herstellung eines Fasergeleges 2, wobei auf dem Ablegewerkzeug 1 eine Ablegefolie 20 zur Aufnahme des Fasergeleges 2 aufgespannt wird und mittels Evakuierung bzw. Druckbeaufschlagung an diesem lagefixiert bzw. von diesem lösbar ist, sowie ein Ablegewerkzeug 1 zur Durchführung eines derartigen Verfahrens.

### Bezugszeichenliste

- 1: Ablegewerkzeug
- 2: Fasergeleges / Laminat
- 4: Korpus
- 6: Werkzeugoberfläche
- 8: Längsachse
- 10: erstes Bohrungsfeld
- 12: Bohrung
- 14: zweites Bohrungsfeld
- 16: Bohrung
- 18: Leitung
- 20: Ablegefolie
- 22: Klebeband
- 24: Ecke
- 26: Ecke
- 28: Ecke
- 30: Ecke
- 32: Längsseite
- 34: Längsseite
- 36: Schmalseite
- 38: Schmalseite
- 40: Hautlage
- 42: Aushärteeinrichtung
- 44: Oberfläche
- 46: Längsversteifung

## Patentansprüche

1. Verfahren zum Ablegen von faserverstärkten vorimprägnierten flächigen Halbzeugen auf einem Ablegewerkzeug (1) zur Herstellung eines Fasergeleges (2), mit den Schritten:
- Aufbringen einer Ablegefolie (20) zur Aufnahme der Halbzeuge auf dem Ablegewerkzeug (1),
- Fixieren der Ablegefolie (20) mittels Vakuumbeaufschlagung, die über ein inneres Bohrungsfeld (10) erzeugt wird,
- Ablegen der Halbzeuge schichtweise zu Hautlagen (40) auf der Ablegefolie (20),
- Übergabe des aufgebauten Fasergeleges (2) an ein nachfolgendes Fertigungsmittel (42) durch Verschwenken des Ablegewerkzeugs (1) und anschließendes Aufheben des Vakuums, und
- Entfernen der Ablegefolie (20) von der ersten Hautlage (40), wobei die Hautlagen (40) über die Beaufschlagung mit zumindest einem Zwischenvakuum kompaktiert werden, das über ein äußeres Vakuumfeld erzeugt wird, wobei das äußere Bohrungsfeld (14) das innere Bohrungsfeld (10) rahmenartig umgreift, und wobei die Vakuumbeaufschlagung durch getrennt voneinander aussteuerbare Bohrungsfelder erfolgt.

2. Verfahren nach Anspruch 1, wobei die Hautlagen (40) von einer Folie bedeckt werden, die eine gegenüber der Außenumgebung abgedichtete Kammer bildet und die bei Anlegen des Zwischenvakuums evakuiert wird.

3. Verfahren nach Anspruch 1 oder 2, wobei ein Blitzschutz an den Hautlagen (40) abgelegt wird.

4. Verfahren nach Anspruch 3, wobei der Blitzschutz mir den zuvor abgelegten Hautlagen (40) durch ein Zwischenvakuum kompaktiert wird.

5. Verfahren nach einem der vorhergehenden Ansprüche, wobei zumindest die Ablegefolie (20) an dem Ablegewerkzeug (1) mit den Schritten positioniert wird:
- Spannen der Ablegefolie (20) in diagonaler Richtung über ihre Ecken (24, 26, 28, 30)
- Spannen der Ablegefolie (20) diametral an ihren Seiten (32, 34, 36, 38), und
- Abdichten der Ablegefolie (20) gegenüber der Außenumgebung umfangsseitig.

6. Ablegewerkzeug (1) zum Ablegen von faserverstärkten flächigen Halbzeugen zur Bildung eines Fasergeleges (2), **gekennzeichnet durch** eine Vielzahl von in seiner Werkzeugoberfläche (6) eingebrachten Bohrungen (12, 16), die mit einer Entlüftungseinrichtung in Fluidverbindung bringbar sind, wobei die Bohrungen (12, 16) in getrennt voneinander ansteuerbaren Bohrungsfeldern (10, 14) angeordnet sind,
wobei die Bohrungsfelder ein inneres (10) und ein äußeres (14) Bohrungsfeld bilden, und
wobei das äußere Bohrungsfeld (14) das innere Bohrungsfeld (10) rahmenartig umgreift.

## Claims

1. Method for placing fibre-reinforced pre-impregnated planar semi-finished products on a placement tool (1) for producing a fibre scrim (2), comprising the steps of:
- applying a placement film (20) for receiving the semi-finished products on the placement tool (1);
- fixing the placement film (20) by means of applying a vacuum, which is created by way of an inner array of holes (10);
- placing the semi-finished products in layers on the placement film (20) to form skin plies (40),
- transferring the built-up fibre scrim (2) to a downstream production means (42) by pivoting the placement tool (1) and subsequently ending the vacuum; and
- removing the placement film (20) from the first skin ply (40), wherein the skin plies (40) are compacted by the application of at least an intermediate vacuum, which is created by way of an outer vacuum zone, wherein the outer array of holes (14) encloses the inner array of holes (10) in the manner of a frame, and wherein the application of the vacuum takes place by arrays of holes that can be activated separately from one another.

2. Method according to Claim 1, wherein the skin plies (40) are covered by a film, which forms a chamber that is sealed with respect to the external environment, and which is evacuated by the application of the intermediate vacuum.

3. Method according to Claim 1 or 2, wherein lightning protection is placed on the skin plies (40).

4. Method according to Claim 3, wherein the lightning protection is compacted with the previously laid skin plies (40) by an intermediate vacuum.

5. Method according to one of the preceding claims, wherein at least the placement film (20) is positioned on the placement tool (1), comprising the steps of:
- clamping the placement film (20) in a diagonal direction by its corners (24, 26, 28, 30)
- clamping the placement film (20) diametrically at its sides (32, 34, 36, 38), and
- sealing the placement film (20) around its periphery with respect to the external environment.

6. Placement tool (1) for the placement of fibre-reinforced planar semi-finished products to form a fibre scrim (2), **characterized by** a multiplicity of holes (12, 16) introduced into its tool surface (6), which holes can be brought into fluidic connection with an evacuation device, wherein the holes (12, 16) are arranged in arrays of holes (10, 14) that can be activated separately from one another, wherein the arrays of holes form an inner array of holes (10) and an outer array of holes (14), and wherein the outer array of holes (14) encloses the inner array of holes (10) in the manner of a frame.

## Revendications

1. Procédé pour placer des produits semi-finis plats préimprégnés renforcés par des fibres sur un outil de placement (1) pour la fabrication d'une nappe fibreuse (2), comprenant les étapes suivantes :
- application d'une feuille de placement (20) pour recevoir les produits semi-finis sur l'outil de placement (1),
- fixation de la feuille de placement (20) au moyen d'une application de vide, qui est produite par le biais d'un champ de perçages intérieur (10),
- placement des produits semi-finis par couches pour former des couches de peau (40) sur la feuille de placement (20),
- transfert de la nappe fibreuse construite (2) sur un moyen de fabrication suivant (42) par pivotement de l'outil de placement (1) et suppression subséquente du vide, et
- enlèvement de la feuille de placement (20) de la première couche de peau (40), les couches de peau (40) étant compactées par le biais de l'application d'au moins un vide intermédiaire, qui est produit par un champ de vide extérieur, le champ de perçages extérieur (14) venant en prise à la manière d'un cadre autour du champ de perçages intérieur (10), et l'application de vide s'effectuant par des champs de perçages pouvant être commandés de manière séparée les uns des autres.

2. Procédé selon la revendication 1, dans lequel les couches de peau (40) sont recouvertes par une feuille qui forme une chambre étanchéifiée par rapport à l'environnement extérieur et qui est mise sous vide lors de l'application du vide intermédiaire.

3. Procédé selon la revendication 1 ou 2, dans lequel une protection contre la foudre est placée sur les couches de peau (40).

4. Procédé selon la revendication 3, dans lequel la protection contre la foudre est compactée avec les couches de peau (40) placées préalablement par le biais d'un vide intermédiaire.

5. Procédé selon l'une quelconque des revendications précédentes, dans lequel au moins la feuille de placement (20) est positionnée sur l'outil de placement (1) par les étapes suivantes :
- tensionnement de la feuille de placement (20) dans la direction diagonale par le biais de ses coins (24, 26, 28, 30),
- tensionnement de la feuille de placement (20) diamétralement au niveau de ses côtés (32, 34, 36, 38), et
- étanchéification de la feuille de placement (20) par rapport à l'environnement extérieur, du côté de la périphérie.

6. Outil de placement (1) pour le placement de produits semi-finis plats renforcés par des fibres pour la formation d'une nappe fibreuse (2), **caractérisé par** une pluralité de perçages (12, 16) pratiqués dans sa surface d'outil (6), qui peuvent être amenés en liaison fluidique avec un dispositif de désaérage, les perçages (12, 16) étant disposés dans des champs de perçages (10, 14) pouvant être commandés séparément les uns des autres, les champs de perçages formant un champ de perçages intérieur (10) et extérieur (14), et le champ de perçages extérieur (14) venant en prise à la manière d'un cadre autour du champ de perçages intérieur (10).
